# EUROPÄISCHE PATENTSCHRIFT

(11) **EP 2 602 214 B1**
(45) Veröffentlichungstag und Bekanntmachung des Hinweises auf die Patenterteilung: **06.07.2016**
(21) Anmeldenummer: 12191556.5
(22) Anmeldetag: 07.11.2012
(51) Int. Cl.: B65G 7/12

(54) **Handhabungsvorrichtung zum Tragen einer Möbelplatte**
Handling device for carrying a furniture panel
Dispositif de manipulation pour porter un panneau de meuble

(30) Priorität: 08.12.2011 DE 202011108807 U
(43) Veröffentlichungstag der Anmeldung: 12.06.2013
(73) Patentinhaber: D. Lechner GmbH, 91541 Rothenburg o.d. Tauber (DE)
(72) Erfinder: Schmutzler, Andreas, 73529 Schwäbisch Gmünd (DE)
(74) Vertreter: advotec.

(56) Entgegenhaltungen:
- AU-A1- 2009 222 572
- DE-U1-202009 005 699
- FR-A1- 2 940 644
- US-A- 3 350 129
- US-A- 4 119 250
- US-A- 4 235 355

## Beschreibung

Die Erfindung betrifft eine Handhabungsvorrichtung zum Tragen einer Möbelplatte, insbesondere zum Tragen einer Küchenarbeitsplatte, nach dem Oberbegriff des Anspruchs 1.

Möbelplatten können aufgrund ihrer Abmessungen, der Materialstärke und des jeweiligen spezifischen Gewichts ein insgesamt sehr hohes Gewicht aufweisen, das das Vertragen dieser Platten erschwert. Im Rahmen des Produktionsprozesses werden die Möbelplatten üblicherweise durch mechanische Handhabungsvorrichtungen manipuliert, so dass das Gewicht der Möbelplatte kein Problem darstellt. Muss die Möbelplatte jedoch vor Ort während der Montage vertragen werden, so muss das Montagepersonal die Möbelplatten von Hand anheben und an den jeweiligen Ort vertragen. Insbesondere bei Küchenarbeitsplatten stellt sich dieses Problem regelmäßig, da Küchenarbeitsplatten aufgrund ihrer Funktion vielfach eine sehr große Länge haben, die nicht zerteilt werden kann. Solcherart lange und damit schwere Küchenarbeitsplatten müssen vom Montagepersonal dann vertragen werden, was einen sehr hohen körperlichen Aufwand darstellt und abhängig von den Örtlichkeiten, beispielsweise einem Treppenhaus, vielfach eine sehr hohe Schwierigkeit darstellt.

Vergleichbare Probleme treten beim Tragen von anderen sperrigen flächigen Gegenständen, wie beispielsweise Matratzen auf. Hierzu schlägt die gattungsgemäße Schrift US 4,119,250 A1 eine Tragevorrichtung vor, welche in Form einer Wanne die Unterkante einer hochgestellten Matratze aufnehmen kann. An den beiden Enden der Wanne sind jeweils Trageschlaufen angenäht. Mit Hilfe dieser Tragevorrichtung wird die Handhabung einer Matratze wesentlich vereinfacht.

Nachteilig bei vorheriger Ausführung ist es zum einen, dass zunächst die Wanne an der Unterseite der Matratze angebracht werden muss, wozu diese entweder komplett hochzuheben ist oder zumindest flach gelegt werden muss. Wenngleich dieses bei Matratzen aufgrund der weitgehend standardisierten Abmessungen nicht relevant ist, stellt sich eine derartige Ausführung für andere Zwecke als untauglich dar, da die Länge der Wanne mit der Länge des zu tragenden Gegenstands im Wesentlichen übereinstimmen muss und somit nicht für individuell ausgeführte Möbelplatten geeignet ist.

Eine flexible und besonders einfach zu verwendende Tragevorrichtung zum Tragen einer Möbelplatte zeigt die US 4,235,355 A1, bei der an beiden Enden eines Seils Eckschlaufen angeordnet sind. Diese Eckschlaufen werden an den beiden unteren Ecken der Möbelplatte angebracht, wobei das Seil mittig zum Tragen ergriffen werden kann.

Vergleichbar der vorherigen Ausführung öffenbart die Schrift US 3,350,129 A1 eine Transportvorrichtung bestehend aus zwei an einer Platte anbringbaren Ecktaschen und von einem mittigen Lasthaken zu den Ecktaschen verlaufenden Hebeseilen. Vorteil gegenüber vorheriger Ausführung ist zum einen, dass die Ecktaschen zuvor verlustfrei an den Ecken der Platte befestigt werden können, und zum anderen, dass diese Ausführung den Transport einer Platte mittels Kran ermöglicht, da die Platte zwischen den beidseitig der Platte verlaufenden Hebeseilen in der Hochlage stabilisiert wird.

Wenngleich die vorherige Ausführung flexibel ohne Aufwand einsetzbar ist zeigt sich jedoch der Nachteil, dass derartige Tragevorrichtungen praktisch nur von einer Person (bzw. mittels Kran) genutzt werden können. Jedoch weisen insbesondere Küchenarbeitsplatten ein großes Gewicht auf, welches zum Tragen zumindest zwei Personen erfordert, wobei ein Einsatz eines Krans regelmäßig ausscheidet.

Eine Tragevorrichtung, welche an der Unterkante einer Möbelplatte einsetzbar ist, offenbart die FR 2 940 644 A1, wobei an einem Seil mit Griffschlaufe am unteren Ende ein Metallhaken angebracht ist, welcher die Möbelplatte unterseitig umgreifen kann. Damit der Metallhaken beim Anheben an der Unterkante verbleibt und nicht abkippen kann, muss die Breite des Metallhakens im Wesentlichen der Stärke der Möbelplatte entsprechen.

Nachteilig bei der vorherigen Ausführung ist jedoch die einseitige Anbringung des Tragseils, wodurch hohe Biegespannungen im Metallhaken auftreten und dieser somit entsprechend massiv auszuführen ist.

Um das Vertragen von Möbelplatten, insbesondere Küchenarbeitsplatten, zu vereinfachen, ist es Aufgabe der vorliegenden Erfindung, eine neuartige Handhabungsvorrichtung vorzuschlagen, das die Nachteile des bekannten Stands der technik vermeidet.

Diese Aufgabe wird durch eine Handhabungsvorrichtung nach der Lehre des Anspruchs 1 gelöst.

Vorteilhafte Ausführungsformen der Erfindung sind Gegenstand der Unteransprüche.

Die Handhabungsvorrichtung wird zum einen durch einen Befestigungsabschnitt charakterisiert, der an einer Ecke der Platte befestigt ist. Zum anderen weist die Handhabungsvorrichtung einen Tragegriff auf, an dem die Hand des Montagepersonals zum Eingriff bringbar ist. Im Ergebnis ermöglicht die Fixierung einer solchen Handhabungsvorrichtung an der Möbelplatte also, dass das Montagepersonal die Möbelplatte besser greifen und manipulieren kann. Denn die Hand des Montagepersonals kann an dem Tragegriff in ergonomisch günstiger Weise eingreifen und einen sicheren Halt finden. Die so am Tragegriff übertragenen Haltekräfte werden über den Befestigungsabschnitt der Handhabungsvorrichtung in die Möbelplatte übertragen. Um eine Möbelplatte sicher transportieren zu können, werden üblicherweise zwei erfindungsgemäße Handhabungsvorrichtungen benötigt, die an zumindest zwei gegenüberliegenden Seiten der Möbelplatte befestigt werden.
Erfindungsgemäß ist vorgesehen, dassdas erste Ende des die Schlaufe bildenden Gewebebandes die Ecke des Befestigungsabschnitts umgreift und auf der Unterseite des Befestigungsabschnitts mit einer Naht vernäht ist, und wobei das zweite Ende des Gewebebandes zur Bildung der Schlaufe einmal umgebogen wird und anschließend am oberen Ende des Befestigungsabschnitts mit einer Naht vernäht ist.

Welche Gestaltung der Tragegriff aufweist, ist grundsätzlich beliebig und kann auf die jeweiligen Ergonomieanforderungen abgestimmt werden. Besonders einfach und kostengünstig herzustellen ist ein Tragegriff, der in der Art einer Schlaufe aus einem Gewebeband gebildet wird. In diese Schlaufe kann die Hand des Trägers einfach von außen eingreifen und mit sicherem Halt hohe Haltekräfte übertragen. Die Befestigung der Schlaufe an dem Befestigungsabschnitt ist dabei ebenfalls außerordentlich einfach zu gewährleisten, da dazu jeweils die Endabschnitte der Schlaufe lediglich an dem Befestigungsabschnitt befestigt, beispielsweise angenäht, werden müssen. Alternativ zum Vernähen der Schlaufe ist auch ein Verschweißen eines entsprechenden Materials, aus dem die Schlaufe gebildet ist, mit dem Material des Befestigungsabschnittes denkbar.

Um den Befestigungsabschnitt einfach an der Möbelplatte platzieren zu können, ist es besonders vorteilhaft, wenn der Befestigungsabschnitt in der Art einer Ecktasche ausgebildet ist, die einen Eckabschnitt der Möbelplatte allseitig umschließt. Dies bedeutet mit anderen Worten, dass die Ecktasche zwei Kanten der Möbelplatte, die dazwischen liegende Ecke und die zugehörigen Eckflächen an der Oberseite und der Unterseite der Möbelplatte umfasst. Durch diese flächige Umgreifung der Möbelplatte kann die Ecktasche einfach und sicher passgenau platziert werden. Zusätzlich können natürlich auch Fixierungen, beispielsweise Fixierbänder und/oder eine Folierung, angebracht werden. Die Verbindung einer Ecktasche als Befestigungsabschnitt der erfindungsgemäßen Handhabungsvorrichtung kann eventuell außerdem den Zusatznutzen bieten, dass die entsprechenden Ecken der Möbelplatte durch die Ecktasche vor Beschädigungen geschützt werden. Alternativ dazu kann aber auch ein eigenes Eckschutzelement zusätzlich zu der Ecktasche vorgesehen werden.

Besonders preisgünstig kann die Ecktasche aus einem Gewebematerial hergestellt werden, da derartige Gewebematerialien eine sehr hohe Tragkraft aufweisen und zudem preisgünstig verfügbar sind.

Um die dreidimensionale Gestaltung der Ecktasche zur mehrseitigen Umfassung des Eckabschnitts der Möbelplatte zu gewährleisten, kann die Ecktasche aus mehreren Gewebematerialabschnitten zusammengenäht werden. Alternativ dazu ist auch die Urformung von Ecktaschen, beispielsweise durch Spritzguss denkbar.

Die Breite der Ecktasche sollte im Wesentlichen der Breite des Kantenschutzes an der Möbelplatte entsprechen, so dass der Eckabschnitt der Möbelplatte in die Ecktasche eingesteckt werden kann, aber zugleich im Wesentlichen kein Überstand durch die Ecktasche entsteht, so dass die Möbelplatten auch mit den angebrachten Ecktaschen problemlos gestapelt werden können.

Die Breite des Gewebebandes, das den Tragegriff bildet, sollte dazu ebenfalls geringfügig kleiner als die Breite der Ecktasche sein, so dass es seitlich nicht über die Oberflächen der Möbelplatte übersteht und damit einer Stapelung der Möbelplatten nicht entgegensteht. Aufgrund der flexiblen Verformbarkeit des Gewebebandes können außerdem die Stirnseiten der Möbelplatten problemlos gegeneinander geschoben werden, wobei das Gewebeband dann vollständig zusammengedrückt wird.

Um die Kräfte zuverlässig von der den Tragegriff bildenden Schlaufe in die Ecktasche übertragen zu können, sollte das die Schlaufe bildende Gewebeband die Ecke der Ecktasche mit zumindest einem Ende übergreifen. Der Kraftfluss der über das Gewebeband eingeleiteten Tragkraft wird somit um die Ecke der Ecktasche umgelenkt und dadurch die Kinematik des Kraftflusses signifikant verbessert. Zur Fixierung der Ecktasche an der Möbelplatte können auf der Innenseite der Ecktasche selbstklebende Fixierelemente vorgesehen werden. Durch Aufkleben dieser Fixierelemente auf der Oberfläche der Möbelplatte kann ein sicherer Halt der Ecktasche gewährleistet werden. Die Möbelplatte selbst kann dabei selbstverständlich auch noch mit einem Schutzmaterial, beispielsweise einer Folie, überzogen sein, so dass in diesen Fällen die Fixierelemente lediglich mittelbar an der Möbelplatte fixiert werden.

Eine Ausführungsform der erfindungsgemäßen Handhabungsvorrichtung ist in den Zeichnungen schematisch dargestellt und wird nachfolgend beispielhaft erläutert.

Es zeigen:
- Fig. 1: eine perspektivische Ansicht einer Handhabungsvorrichtung von schräg oben;
- Fig. 2: die Handhabungsvorrichtung gemäß Fig. 1 in einer perspektivischen Ansicht von schräg unten;
- Fig. 3: die Handhabungsvorrichtung gemäß Fig. 1 nach Anbringung an einer Ecke einer Möbelplatte.

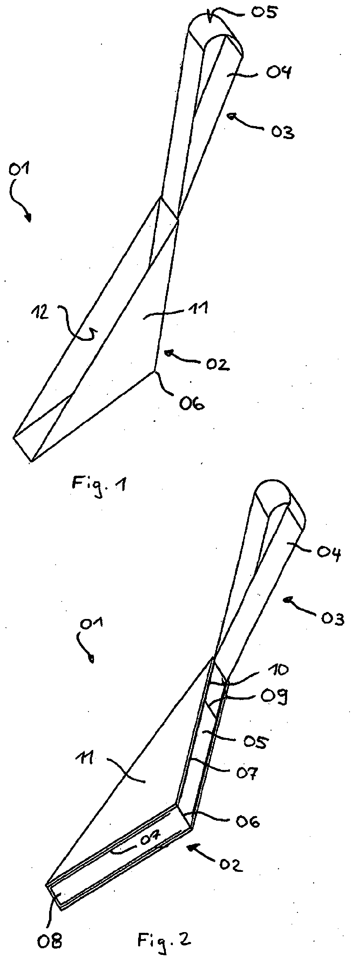

Fig. 1 zeigt eine Handhabungsvorrichtung 01 zum Vertragen von Möbelplatten bestehend im Wesentlichen aus einem Befestigungsabschnitt 02 und einem Tragegriff 03. Der Tragegriff 03 wird dabei von einer Schlaufe 04 gebildet, die aus einem Gewebebandabschnitt hergestellt ist.

In Fig. 2 ist die Fixierung der Schlaufe 04 am Befestigungsabschnitt 02 ersichtlich. Das erste Ende des die Schlaufe 04 bildenden Gewebebandes 05 umgreift die Ecke 06 des Befestigungsabschnitts 02 und ist auf der Unterseite des Befestigungsabschnitts 02 mit einer Naht 07 vernäht. Das zweite Ende 09 des Gewebebandes 05 wird zur Bildung der Schlaufe 04 einmal umgebogen und anschließend am oberen Ende des Befestigungsabschnitts 02 mit einer Naht 10 vernäht.

Der Befestigungsabschnitt 02 selbst ist in der Art einer Ecktasche 11 ausgebildet, die den Eckabschnitt einer Möbelplatte allseitig umschließen kann. Die Ecktasche 11 wird dabei durch vernähen mehrerer Gewebematerialabschnitte hergestellt um die notwendige Form zu erhalten. Auf der Innenseite 12 der Ecktasche 11 können selbstklebende Fixierelemente vorgesehen werden, um die Ecktasche in einfacher Weise an einer Möbelplatte fixieren zu können.

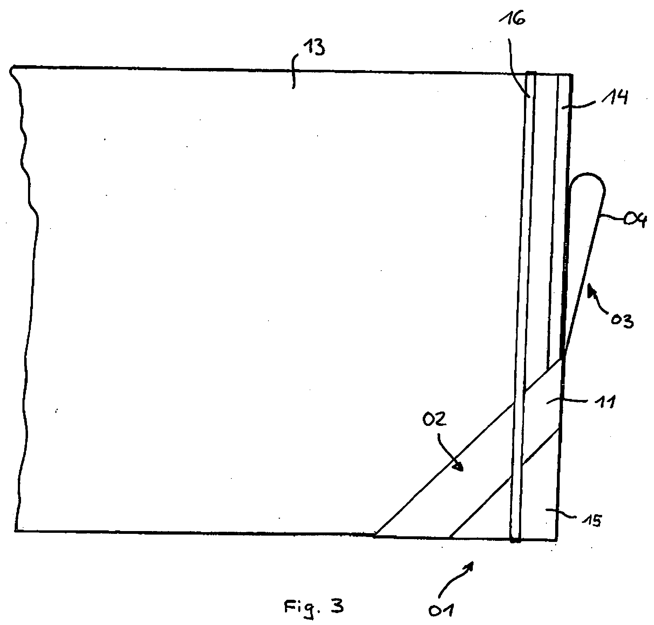

Fig. 3 zeigt die Anbringung einer Handhabungsvorrichtung 01 an einer Möbelplatte 13. In Fig. 3 ist dabei nur die rechte Hälfte der Möbelplatte 13 dargestellt. An der linken, nicht dargestellten Ecke der Möbelplatte 13 wäre in gleicher Weise eine weitere Handhabungsvorrichtung 01 anzubringen. Durch Greifen der Schlaufen 04 kann die Möbelplatte dann in einfacher Weise angehoben und sicher vertragen werden.

Zum Schutz der Plattenkanten an der Möbelplatte 13 sind außerdem ein Kantenschutzelement 14 und ein Eckschutzelement 15 vorgesehen. Das Eckschutzelement 15 wird zusammen mit der Ecktasche 11 von einem Fixierband 16 an der Möbelplatte 13 fixiert. Alternativ oder Additiv dazu kann eine nicht dargestellte Folierung zur Fixierung des Eckschutzelements 15 und der Ecktasche 11 vorgesehen werden.

## Patentansprüche

1. Handhabungsvorrichtung (01) zum Tragen einer Möbelplatte (13), insbesondere zum Tragen einer Küchenarbeitsplatte, wobei die Handhabungsvorrichtung (01) einen Befestigungsabschnitt (02) aufweist, der an einer Ecke der Möbelplatte (13) befestigbar ist, und wobei die Handhabungsvorrichtung (01) einen Tragegriff (03) aufweist, an dem eine Hand beim Tragen der Möbelplatte (13) zum Eingriff bringbar ist,
**dadurch gekennzeichnet, dass** der Tragegriff (03) in der Art einer Schlaufe (04) aus einem Gewebeband (05) gebildet ist,
und dass das erste Ende des die Schlaufe (04) bildenden Gewebebandes (05) die Ecke (06) des Befestigungsabschitts (02) umgreift und auf der Unterseite des Befestigungsabschnitts (02) mit einer Naht (07) vernäht ist, und wobei das zweite Ende (09) des Gewebebandes (05) zur Bildung der Schlaufe (04) einmal umgebogen wird und anschließend am oberen Ende des Befestigungsabschnitts (02) mit einer Naht (16) vernäht ist.

2. Handhabungsvorrichtung nach Anspruch 1,
**dadurch gekennzeichnet,**
**dass** die Enden (08, 09) des Gewebebands (05) zur Bildung der Schlaufe (04) mit dem Befestigungsabschnitt (02) vernäht sind.

3. Handhabungsvorrichtung nach einem der Ansprüche 1 bis 2,
**dadurch gekennzeichnet,**
**dass** der Befestigungsabschnitt (02) in der Art einer Ecktasche (11) ausgebildet ist, die einen Eckabschnitt der Möbelplatte (13) allseitig umschließen kann.

4. Handhabungsvorrichtung nach Anspruch 3,
**dadurch gekennzeichnet,**
**dass** die Ecktasche (11) aus einem Gewebematerial gebildet ist.

5. Handhabungsvorrichtung nach Anspruch 4,
**dadurch gekennzeichnet,**
**dass** zur Bildung der Ecktasche (11) mehrere Gewebematerialabschnitte miteinander vernäht sind.

6. Handhabungsvorrichtung nach einem der Ansprüche 1 bis 5,
**dadurch gekennzeichnet,**
**dass** die Breite der Ecktasche (11) im wesentlichen der Breite des Kantenschutzes an der Möbelplatte (13) entspricht.

7. Handhabungsvorrichtung nach einem der Ansprüche 1 bis 6,
**dadurch gekennzeichnet,**
**dass** die Breite des Gewebebands (05), das den Tragegriff (03) bildet, geringfügig kleiner als die Breite der Ecktasche (11) ist.

8. Handhabungsvorrichtung nach einem der Ansprüche 1 bis 7,
**dadurch gekennzeichnet,**
**dass** zumindest ein Ende (08) des Gewebebands (05), das den Tragegriff (03) bildet, die Ecke (06) der Ecktasche (11) übergreift.

9. Handhabungsvorrichtung nach einem der Ansprüche 1 bis 8,
**dadurch gekennzeichnet,**
**dass** auf der Innenseite (12) der Ecktasche (11) selbstklebende Fixierelemente vorgesehen sind, mit denen die Ecktasche (11) mittelbar oder unmittelbar an der Möbelplatte (13) fixiert werden kann.

## Claims

1. A handling device (01) for carrying a furniture panel (13), in particular for carrying a kitchen countertop, wherein the handling device (01) includes a fastening portion (02), which can be fastened to a corner of the furniture panel (13), and wherein the handling device (01) includes a carrying handle (03), a hand being able to take hold of said handle when carrying the furniture panel (13),
**characterised in that**
the carrying handle (03) is formed in the manner of a loop (04) made of a fabric ribbon (05),
and **in that** the first end of the fabric ribbon (05) forming the loop (04) reaches around the corner (06) of the fastening portion (02) and is sewn up with a seam (07) on the underside of the fastening portion (02), and wherein the second end (09) of the fabric ribbon (05) is bent once for forming the loop (04) and is subsequently sewn up with a seam (10) at the upper end of the fastening portion (02).

2. The handling device according to claim 1,
**characterised in that**
the ends (08, 09) of the fabric ribbon (05), for forming the loop (04), are sewn to the fastening portion (02).

3. The handling device according to any one of the claims 1 to 2,
**characterised in that**
the fastening portion (02) is embodied in the manner of a corner pocket (11), which is able to enclose a corner portion of the furniture panel (13) on all sides.

4. The handling device according to claim 3,
**characterised in that**
the corner pocket (11) is formed from a fabric material.

5. The handling device according to claim 4,
**characterised in that**
for forming the corner pocket (11), several fabric material portions are sewn to one another.

6. The handling device according to any one of the claims 1 to 5,
**characterised in that**
the width of the corner pocket (11) substantially corresponds to the width of the edge protection at the furniture panel (13).

7. The handling device according to any one of the claims 1 to 6,
**characterised in that**
the width of the fabric ribbon (05), which forms the carrying handle (03), is slightly smaller than the width of the corner pocket (11).

8. The handling device according to any one of the claims 1 to 7,
**characterised in that**
at least one end (08) of the fabric ribbon (05), which forms the carrying handle (03), reaches over the corner (06) of the corner pocket (11).

9. The handling device according to any one of the claims 1 to 8,
**characterised in that**
self-adhesive fixing elements are disposed on the inner side (12) of the corner pocket (11), with the help of which elements the corner pocket (11) can indirectly or directly be fixed to the furniture panel (13).

## Revendications

1. Dispositif (01) de manipulation pour porter un panneau de meuble (13), en particulier pour porter un plan de travail de cuisine, dans lequel le dispositif (01) de manipulation présente une partie (02) de fixation, qui peut être fixée à un coin du panneau de meuble (13), et dans lequel le dispositif (01) de manipulation présente une poignée (03), une main pouvant pénétrer dans ladite poignée en portant le panneau de meuble(13),
**caractérisé en ce que**
la poignée (03) est formée de type dragonne (04) en ruban tissulaire (05),
et **en ce que** la première extrémité du ruban tissulaire (05) formant la dragonne (04) enlace le coin (06) de la partie (02) de fixation et est suturée avec une couture (07) sur le dessous de la partie (02) de fixation, et dans lequel la deuxième extrémité (09) du ruban tissulaire (05) est recourbée une fois pour former la dragonne (04) et est ensuite suturée avec une couture (10) à l'extrémité supérieure de la partie (02) de fixation.

2. Dispositif de manipulation selon la revendication 1,
**caractérisé en ce que**
les extrémités (08, 09) du ruban tissulaire (05), pour former la dragonne (04), sont suturées avec la partie (02) de fixation.

3. Dispositif de manipulation selon l'une quelconque des revendications 1 à 2,
**caractérisé en ce que**
la partie (02) de fixation est configurée de type poche de coin (11), qui peut enlacer une partie de coin du panneau de meuble (13) de tous les côtés.

4. Dispositif de manipulation selon la revendication 3,
**caractérisé en ce que**
la poche de coin (11) est formée d'un matériel tissulaire.

5. Dispositif de manipulation selon la revendication 4,
**caractérisé en ce que,**
pour former la poche de coin (11), plusieurs parties de matériel tissulaire sont suturées les unes avec les autres.

6. Dispositif de manipulation selon l'une quelconque des revendications 1 à 5,
**caractérisé en ce que**
la largeur de la poche de coin (11) essentiellement correspond à la largeur de la protection de bords au panneau de meuble (13).

7. Dispositif de manipulation selon l'une quelconque des revendications 1 à 6,
**caractérisé en ce que**
la largeur du ruban tissulaire (05), qui forme la poignée (03), est légèrement inférieure à la largeur de la poche de coin (11).

8. Dispositif de manipulation selon l'une quelconque des revendications 1 à 7,
**caractérisé en ce qu'**
au moins une extrémité (08) du ruban tissulaire (05), qui forme la poignée (03), entoure le coin (06) de la poche de coin (11) par le haut.

9. Dispositif de manipulation selon l'une quelconque des revendications 1 à 8,
**caractérisé en ce que**
des éléments de fixation autocollants sont disposés sur la face intérieure (12) de la poche de coin (11), la poche de coin (11) pouvant être fixée indirectement ou directement au panneau de meuble (13) à l'aide desdits éléments de fixation.
